# EUROPÄISCHE PATENTSCHRIFT

(11) **EP 0 690 769 B1**
(45) Veröffentlichungstag und Bekanntmachung des Hinweises auf die Patenterteilung: **17.06.1998**
(21) Anmeldenummer: 94912519.9
(22) Anmeldetag: 23.03.1994
(51) Int. Cl.: B24B 45/00, B24D 5/16, B23B 31/117

(54) **ANORDNUNG ZUR ZENTRIERTEN UND AXIAL FIXIERTEN AUFNAHME EINES ROTIERENDEN KÖRPERS UND ZUGEHÖRIGER ADAPTER**
ARRANGEMENT AND CORRESPONDING ADAPTER FOR RECEIVING A ROTARY BODY IN A CENTERED AND AXIALLY FIXED MANNER
AGENCEMENT ET ADAPTATEUR CORRESPONDANT RECEVANT DE MANIERE CENTREE ET AXIALEMENT FIXE UN CORPS EN ROTATION

(30) Priorität: 23.03.1993 DE 4309321
(43) Veröffentlichungstag der Anmeldung: 10.01.1996
(73) Patentinhaber: GÜHRING, Jörg, D-72458 Albstadt (DE)
(72) Erfinder: REINAUER, Josef, D-72488 Sigmaringen (DE)
(74) Vertreter: Winter, Konrad Theodor, Dipl.-Ing.
(86) Internationale Anmeldenummer: EP9400923
(87) Internationale Veröffentlichungsnummer: WO9421428

(56) Entgegenhaltungen:
- DE-U- 8 414 854
- US-A- 1 648 032
- US-A- 3 420 537
- US-A- 4 540 187

## Beschreibung

Die Erfindung bezieht sich auf eine Anordnung zur zentrierten und axial fixierten Aufnahme eines rotierenden Körpers, insbesondere einer Schleifscheibe bzw. einer Hochgeschwindigkeits-Schleifscheibe gemäß dem Oberbegriff des Patentanspruchs 1 und auf einen zugehörigen Adapter für die radial- und axialfeste Aufspannung eines rotierenden Körpers gemäß Patentanspruch 18.

Es besteht seit jeher ein erhebliches Bedürfnis, insbesondere in der Zerspannungstechnik schnell rotierende Körper zentriert und axial fest mit einer Spindel bzw. einem anderen Werkzeugträger, wie z. B. einem Werkzeugsystemmodul oder aber mit einem Werkstückträger zu verbinden. Dieses Problem stellt sich mit besonderer Schärfe bei Hochgeschwindigkeits-Schleifscheiben, die mit Umfangsgeschwindigkeiten von über 100 m/s betrieben werden. Derartige Schleifkörper sind von hochfesten Stahlscheiben gebildet, die eine Diamantbeschichtung oder eine CBN (Cubisches Bornitrid)-Beschichtung haben, wobei ein Abrichten derartiger Schleifkörper nicht mehr erfolgt. Diese rotierenden Körper müssen mit höchster Rundlaufgenauigkeit mit der Antriebsspindel gekoppelt sein, wobei darüberhinaus das Problem besteht, bei der Aufspannung Rundschlag-Abweichungen möglichst klein zu halten und dennoch eine sichere, axiale Fixierung an der Spindel zu gewährleisten.

Es sind in diesem Zusammenhang bereits Anordnungen der eingang beschriebenen Art bekannt geworden, wobei die weit verbreitetste Lösung darin besteht, eine im Zentrum mit einer zylindrischen Ausnehmung ausgestattete Schleifscheibe auf einen zylindrischen Dorn unter Zuhilfenahme mehrerer, über den Umfang gleichmäßig verteilter Spannschrauben gegen eine Radial-Stirnfläche des Trägerteils zu spannen. Hierbei ist allerdings das Spiel der Spannschrauben einerseits und das Spiel des Zentrierdorns in der zentrischen Ausnehmung der Schleifscheibe andererseits durch verhältnismäßig langwierige Montage- und Justierarbeiten auszuschalten.

Gemäß einer weiteren bekannten Anordnung erfolgt die radiale, zentrierte Aufspannung unter Zuhilfenahme von vier im Winkelabstand von 90° zueinander stehenden Spannkörpern, die in radialer Richtung einstellbar sind, so daß mit der Verspannung gleichzeitig der Rundlauf exakt einstellbar ist. Hierdurch wird zwar der Rundlauf der Schleifscheibe exakt einstellbar, eine axiale Verspannung ist mit dieser Anordnung allerdings nicht ohne weiteres und nich in ausreichendem Ausmaß zu bewerkstelligen.

Es wäre zwar eine Anordnung denkbar, bei der die Aufnahmeöffnung im rotierenden Körper, d. h. in der Schleifscheibe, konisch ausgebildet ist und die axial- und radialfeste Aufspannung dadurch vorgenommen wird, daß die Schleifscheibe mittels einer Spannplatte auf den komplementär konisch ausgebildeten axialen Zentrierdorn des Nabenteils gedrückt wird, indem axial wirkende Spannmittel beispielsweise in Form von mehreren, über den Umfang verteilten Spannschrauben Verwendung finden, deren Kopf sich an der Spannplatte abstützen und deren Gewindeabschnitte mit einem nabenfesten Teil in Eingriff stehen. Nachteilig bei dieser Version wäre hier allerdings eine verhältnismäßig aufwendige Bearbeitung der Zentrier-Aufnahmebohrung in der Schleifscheibe, wobei selbst für den Fall, daß ein sehr enger Toleranzbereich eingehalten wird, das Problem besteht, daß der Planschlag, insbesondere bei axial stärker ausgebildeten Schleifscheiben, nur schwerlich in den gewünschten engen Toleranzbereichen gehalten werden kann.

Schließlich gibt es Lösungsansätze für Anordnungen der vorstehend beschriebenen Gattung, die die sogenannte Dehnspanntechnik benutzen, gemäß der im Bereich des Zentrierdorns mit Hydraulikmittel gefüllte und über den Umfang gleichmäßig verteilte Taschen ausgebildet sind, die von einem dünnen Metallblech abgedeckt sind. Durch Druckbeaufschlagung dieser mit Hydraulik-Strömungsmittel gefüllten Taschen erfolgt eine gleichmäßige Zentrierung der aufgeschobenen Schleifscheibe. Damit läßt sich zwar der Rundlauf der Schleifscheibe sehr exakt einstellen. Diese Spanntechnik erfordert allerdings zusätzliche Maßnahmen, um die Schleifscheibe auch in axialer Richtung mit möglichst geringem Planschlag an der Nabe zu fixieren. Dies macht diese bekannte Spanntechnik sehr aufwendig, wobei darüberhinaus von Nachteil ist, daß diese Spanntechnik besondere Druckerzeugungseinrichtungen benötigt.

Aus der US-A 1 684 032 ist eine Spannvorrichtung zur zentrierten Aufnahme eines rotierenden Körpers auf einem Trägerteil bekannt. Das Trägerteil verfügt über einen in eine zentrische Aufnahmeöffnung des rotierenden Körpers hineinragenden, axialen Zentrierdorn und einen daran anschließenden radialen Bund. Der rotierende Körper kann axial gegen den radialen Bund geschoben werden. Zwischen dem Zentrierdorn und der Aufnahmeöffnung ist ein elastisch aufweitbarer Axialfortsatz angeordnet, dessen Innenkontur der Außenkontur des Zentrierdorns und dessen Außenkontur der Innenkontur der Aufnahmeöffnung entsprechen. Der Axialfortsatz ist mit einer Spannplatte zu einem Adapterteil verbunden. Die Spannplatte hat dabei einen kleineren Durchmesser als der Axialfortsatz. In dem Adapterteil ist eine zentrale Schraube mit unterschiedlichen Steigungsabschnitten aufgenommen. Diese Schraube kann mit einer im Trägerteil angeordneten Gewindebohrung in Eingriff gebracht werden. Durch Anziehen der Schraube kann die zylindrische Außenfläche des Axialfortsatzes unter elastischer Aufweitung des Axialfortsatzes radial gegen den rotierenden Körper gedrückt werden.

Der Erfindung liegt deshalb die Aufgabe zugrunde, eine Anordnung zur zentrierten und axial fixierten Aufnahme eines rotierenden Körpers, insbesondere einer Schleifscheibe bzw. einer Hochgeschwindigkeits-Schleifscheibe gemäß dem Oberbegriff des Patentanspruchs 1 zu schaffen, die bei einfachem Aufbau in der Lage ist, selbst axial stärkere und verhältnismäßig schwere Schleifscheiben axial- und radialfest auf der Nabe mit geringem Rundlauffehler und Planschlag zu fixieren. Dabei soll die Anordnung so getroffen sein, daß sich ein Höchstmaß an Flexibilität bezüglich der Gestaltung der Nabe und des Zentrierdorns ergibt, was die Möglichkeit einschließen soll, das erfindungsgemäße Spannprinzip in Verbindung mit herkömmlichen Werkzeugsystemmodulen zu kombinieren.

Diese Aufgabe wird durch die Merkmale des Patentanspruchs 1 und insbesondere durch einen Adapter mit den Merkmalen des Patentanspruchs 18 gelöst.

Erfindungsgemäß erfolgt das Aufspannen der Schleifscheibe durch einen besonders gestalteten Adapter, dessen Spannplatte einen vorzugsweise einstückig angeformten und elastisch in radialer Richtung verformbaren, vorzugsweise dünnwandigen Axialfortsatz trägt, auf dem der schnell rotierende Körper, insbesondere die Schleifscheibe vorzugsweise mit Passung aufgefädelt ist. Im Aufspannzustand kommt dieser vorzugsweise dünnwandige Axialfortsatz zwischen der Aufspann-Aufnahmeöffnung der Schleifscheibe und dem Zentrierdorn des Nabenteils zu liegen, das im Anschluß an den Zentrierdorn die der Spannplatte gegenüberliegende, zweite radiale Auflagefläche für die Schleifscheibe ausbildet. Zu Beginn des Aufspannvorgangs kann die Schleifscheibe auf dem Axialfortsatz bereits in satte Anlage mit der Radial-Stirnfläche des Nabenteils gebracht werden. Beim Zusammenspannen des Adapters mit der Nabe wird der Axialfortsatz in den Raum zwischen der Innenoberfläche der Schleifscheibe und der Außenoberfläche des Zentrierdorns eingepreßt, wobei sich die gestirnte Radialfläche der Spannplatte allmählich der äußeren Stirnfläche der Schleifscheibe nähert. Bei dieser Bewegung wird der Axialfortsatz zunehmend radial elastisch aufgeweitet, und zwar so lange, bis der Radialbund der Spannplatte die Schleifscheibe satt berührt. Toleranzbedingte Passungs-Überbestimmungen werden somit durch die radiale Elastizität des Axialfortsatzes kompensiert, der beim Zusammenspannen von Adapter und Nabenteil in zunehmend festen Anlagekontakt mit der Aufnahmeöffnung der Schleifscheibe gelangt, wodurch die Schleifscheibe mit geringster Rundlauf-Ungenauigkeit auf dem Zentrierdorn zentriert wird. Die für die Aufspannung erforderlichen zusätzlichen Komponenten sind einfach herstellbar und durch eine einfache Mechanik, d. h. mit einfachen Handgriffen betätigbar, wobei sich der zusätzliche Vorteil ergibt, daß die Einzelkomponenten zu einer Baueinheit in Form des Adapters zusammengestellt werden können, der dann mit dem betreffenden Nenndurchmesser der Aufnahmeöffnung der Schleifscheibe kombinierbar ist.

Vorteilhafte Weiterbildungen der Erfindung sind Gegenstand der Unteransprüche.

Mit der Weiterbildung des Patentanspruchs 2 ergibt sich eine Vereinfachung der zentrisch genauen Ausbildung der Aufnahmeöffnung in der Schleifscheibe.

Die radiale Elastizität des Axialfortsatzes kann beispielsweise über die Wandstärke bzw. über den Übergang vom Axialfortsatz in die Spannplatte gesteuert werden. Eine weitere, vorteilhafte Variante ist Gegenstand des Patentanspruchs 3, wobei die hier vorgesehene Schwächungslinie bzw. die hier vorgesehenen Schwächungslinien in axialer Richtung, aber auch in Umfangsrichtung oder auch wendelförmig verlaufen können.

Das erfindungsgemäße Spannprinzip ist gleichermaßen für ein direktes Aufspannen der Schleifscheibe an eine Maschinenspindel wie auch für das Aufspannen auf einen separaten Werkzeugsystemmodul wie z. B. eine genormte Werkzeug- oder Werkstück-Aufnahme anwendbar.

Wenn der Zentrierdorn von einem Hohlschaft gebildet ist, ergibt sich auch in diesem Bereich eine über die Formgebung des Hohlschaftes oder über dessen Übergangsstelle zum massiveren Trägerteil steuerbare radiale Elastizität. Dies führt zu dem besonderen Vorteil, daß der Axialfortsatz mit noch größerer Verspannung zwischen Zentrierdorn und Schleifscheibe eingetrieben werden kann, wobei dann zur Überbrückung eines gegebenenfalls noch vorhandenen axialen Spalts zwischen Spannplatte und Schleifscheibe die radiale Verformung des Zentrierdorns nach innen dazu genutzt wird, um eine satte Flächenanlage zwischen Schleifscheibe und Spannplatte sicherzustellen.

Die Verspannung zwischen Adapter und Nabe kann auf verschiedenste Art und Weise erfolgen, wobei sich in jedem Fall eine radial spielfreie Aufnahme der Schleifscheibe und gleichzeitig eine hohe axiale Verspannung des Schleifkörpers mit der Nabe ergibt. Eine besonders einfache Variante ist Gegenstand des Patentanspruchs 7 und 8 bzw. 20 und 21, wobei sich ein sehr guter Kraftfluß ergibt, wodurch eine hohe Axialverspannung erreichbar ist.

Mit der Weiterbildung des Patentanspruchs 9 ergibt sich eine besonders einfache Handhabung, da lediglich noch ein einziges, vorzugsweise zentral angeordnetes, von der Außenseite des Adapters her betätigbares Stellteil erforderlich wird, um die Axialverspannung bzw. das Einziehen des Adapters auf den Zentrierdorn zu bewerkstelligen.

Wenn die Spannkörper gemäß den Patentansprüchen 10 und 11 ausgebildet werden, ergibt sich mit einfachen Maßnahmen eine mehrfache Kraftverstärkung, durch die die Axial- und Radialverspannung noch intensiver gehalten werden kann.

Durch die Gestaltung der Spannelemente gemäß Patentanspruch 12 bzw. 24 wird der Kraftfluß zwischen Adapter und Nabe sehr günstig bzw. auf sehr kleinem Raum untergebracht, so daß die Einzugskraft noch höher gehalten werden kann.

Die Kraftübersetzung wird durch die Weiterbildung des Patentanspruchs 13 bzw. 25 noch weiter gesteigert.

Etwas aufwendiger, jedoch durch keinerlei Nebenkraftfluß hinsichtlich der Effektivität geschwächt ist die Betätigung der Spannelemente gemäß der Weiterbildung nach Patentanspruch 17 bzw. 29. Es genügen in diesem Fall bereits geringe Betätigungskräfte mittels eines einfach zu handhabenden Werkzeugs, beispielsweise in Form eines Innensechskant-Schlüssels, um höchste Axialkräfte zwischen Adapter und Nabe auszuüben. Dabei ergibt sich der besondere Vorteil, daß die Konusform günstig zur Einleitung der Abdruckkräfte zum Lösen der Aufspannung herangezogen werden könnten. Hierzu ist die zentrale Schraube lediglich in Löserichtung so weit zu drehen, bis der Konus mit seiner dem Schraubenkopf abgewandten Stirnfläche an einem radial nach innen gezogenen Wandabschnitt des Nabenteils anschlägt, woraufhin eine Schwell-Abdrückkraft aufgebracht werden kann.

Weitere vorteilhafte Ausgestaltungen sind Gegenstand der übrigen Unteransprüche.

Nachstehend werden anhand schematischer Zeichnungen mehrere Ausführungsbeispiele der Erfindung näher erläutert. Es zeigen:
- Fig. 1: die Ansicht eines Schnitts einer ersten Ausführungsform der Anordnung zur zentrierten und axial fixierten Aufnahme einer Schleifscheibe auf einem Nabenteil, wobei das Nabenteil hier ein Teil einer Werkzeugmaschinenspindel darstellt;
- Fig. 2: in einer der Fig. 1 entsprechenden Darstellung eine Variante der Anordnung, bei der die Schleifscheibe auf einem Werkzeugsystemmodul aufgezogen ist;
- Fig. 3: eine der Fig. 1 ähnliche Darstellung einer weiteren Ausführungsform der Anordnung zum Aufspannen der Schleifscheibe auf einen Zentrierdorn einer Spindel, wobei in der unteren Hälfte der Fig. 3 die Spannmittel im gelösten Zustand gezeigt sind;
- Fig. 4: eine der Fig. 2 entsprechende Darstellung der Ausführungsform nach Fig. 3, wobei wiederum in der unteren Hälfte die Spannmittel im gelösten Zustand dargestellt sind; und
- Fig. 5: eine der Fig. 4 ähnliche Darstellung einer dritten Ausführungsform der Vorrichtung zur zentrierten und axial fixierten Aufnahme einer Schleifscheibe auf einem Nabenteil.

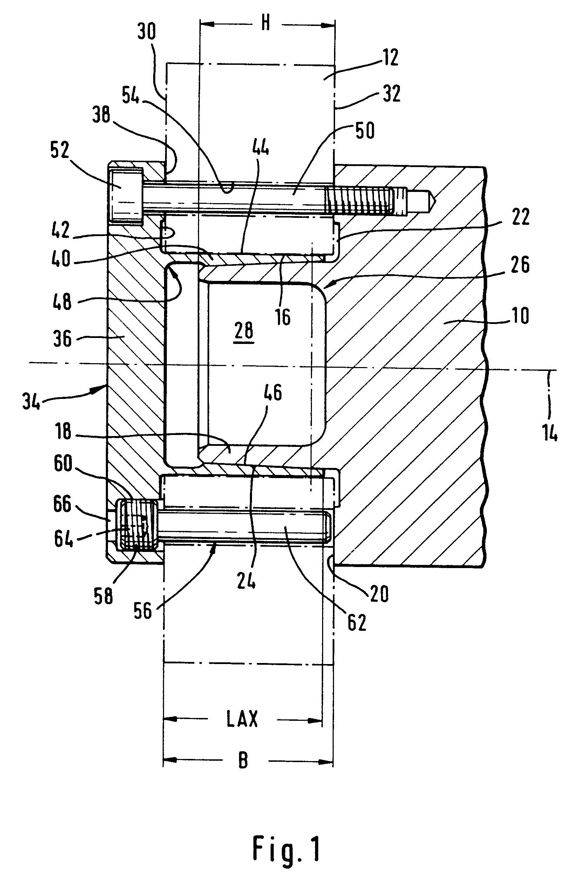

In Fig. 1 ist mit dem Bezugszeichen 10 ein Träger für eine Schleifscheibe 12 bezeichnet. Bei dem Teil 10 handelt es sich bei der Ausgestaltung nach Fig. 1 um eine Schleifmaschinenspindel. Es soll jedoch bereits an dieser Stelle hervorgehoben werden, daß die Erfindung nicht auf diese Anordnung beschränkt ist. Vielmehr kann es sich bei dem Teil 10 um jedes andere Werkzeug- oder Werkstück-Trägerteil handeln. Bei der Schleifscheibe 12 handelt es sich um einen regelmäßig mit sehr hoher Geschwindigkeit rotierenden Körper, der mit verhältnismäßig hoher Rundlaufgenauigkeit und mit geringstem Planschlag zur Spindelachse 14 auf dieser aufgezogen werden soll. Die Schleifscheibe 12 ist beispielsweise von einer Hochgeschwindigkeits-Schleifscheibe mit Diamantbeschichtung oder einer CBN (Cubisches Bornitrid)-Beschichtung gebildet, die eine zentrische zylindrische Ausnehmung 16 hat.

Die Maschinenspindel 10 hat zur zentrierten und axial fixierten Aufspannung der Schleifscheibe 12 einen sich in axialer Richtung erstreckenden, hohlen Zentrierdorn 18, der in einen senkrecht zur Achse 14 ausgerichteten Radialbund 20 übergeht, und zwar vorzugsweise über einen Freistich 22. Die Außenoberfläche 24 des Zentrierdorns 18 ist von einer Konusfläche mit flachem Kegelwinkel gebildet. Die Wandstärke des Zentrierdorns 18 ist - was nachstehend noch näher erläutert werden soll - so ausgeführt, daß eine gesteuerte radiale Elastizität des Zentrierdorns gegeben ist. Zu diesem Zweck kann auch vorgesehen sein, den Grund 26 der Innenausnehmung 28 mit einer besonderen geometrischen Kontur auszustatten.

Um die Schleifscheibe 12 mit den planparallelen Stirnseiten 30, 32, welche senkrecht zur Achse 14 stehen, axial und radial fixiert sowie zentriert auf der Schleifscheibe 10 befestigen zu können, ist ein mit 34 bezeichnetes Adapterteil vorgesehen, das ebenfalls als rotationssymmetrisches Teil gestaltet ist, dessen Achse mit der Achse 14 zusammenfällt. Das Adapterteil 34 hat eine sich senkrecht zur Achse 14 erstreckende Spannplatte 36 mit einer gestirnten Spannfläche 38, die über eine Freidrehung 42 in einen axialen und vorzugsweise dünnwandigen Axialfortsatz 40 übergeht, dessen Außenoberfläche 44 derart an die Innenoberfläche 16 der zylindrischen Ausnehmung angepaßt ist, daß zwischen diesen Flächen im noch gelösten Zustand der Verbindung eine Spielpassung auftritt. Der hohle Axialfortsatz hat eine Innenoberfläche 46, die entsprechend dem Konus der Außenoberfläche 24 des Zentrierdorns 18 ausgebildet ist, so daß sich die Flächen 46 und 24 im aufgespannten Zustand der Schleifscheibe 12 satt aneinander anschmiegen.

Mit 48 ist ein Übergangsbereich zwischen dem Axialfortsatz 40 und der Spannplatte 36 bezeichnet, die so gestaltet ist, daß dadurch die radiale elastische Nachgiebigkeit des Axialfortsatzes 40 steuerbar ist.

Die axiale Länge LAX des Axialfortsatzes 40 ist derart an die Breite B der Schleifscheibe 12 und an die Höhe H des Zentrierdorns 18 angepaßt, daß das äußere Ende des Axialfortsatzes 40 im fest aufgespannten Zustand der Schleifscheibe 12 noch einen ausreichenden Axialabstand vom Freistich 22 auf seiten der Spindel 10 hat.

Mit 50 sind mehrere, vorzugsweise 3, über den Umfang gleichmäßig verteilte Spannschrauben bezeichnet, deren Kopf 52 sich an einer Senkungsfläche der Spannplatte 36 abstützt und deren Gewindeabschnitt mit einer Gewindebohrung in der Spindel 10 in Eingriff steht. Der Schaft der Spannschrauben 50 erstreckt sich mit Spiel durch entsprechende axiale Ausnehmungen 54 in der Schleifscheibe 12.

An der Spannplatte 36 stützen sich darüberhinaus mehrere, über den Umfang ebenfalls gleichmäßig verteilte Abdrückschrauben 56 ab, die mit ihrem Gewindeabschnitt 58 in eine Gewindebohrung 60 der Spannplatte 36 gehalten sind. An dem Gewindeabschnitt schließt sich ein Schaftabschnitt 62 an, der im eingedrehten Zustand des Gewindeabschnitts 58 in die Gewindebohrung 60 einen gewissen Mindestabstand vom Radialbund 20 hat.

Der Gewindeabschnitt 58 ist mit einer Innensechskantausnehmung 64 ausgestattet, in die durch eine Bohrung 66 ein geeignetes Werkzeug zur Betätigung der Abdrückschraube 56 eingreifen kann.

Zum Aufspannen der Schleifscheibe 12 auf der Spindel 10 geht man wie folgt vor:

Die Schleifscheibe 12 kann auf den Axialfortsatz 40 aufgefädelt werden und diese vormontierte Einheit wird dann auf den Zentrierdorn 20 quasi kraftfrei aufgeschoben. Die Teile 10, 36 und 12 liegen dann bereits mit einer gemeinsamen zentrierten Achse 14 in einer vorbestimmten Lage zueinander. In dieser Phase kann die Spannplatte 36 und die Schleifscheibe 12 noch bezüglich der Spindel 10 so verdreht werden, daß die Bohrungen zur Aufnahme der Spannschrauben 50 mit den Gewindebohrungen in der Spindel 10 in Fluchtung zueinander stehen. Die Schleifscheibe 12 wird dann gemäß Fig. 1 nach rechts in flächigen Anlagekontakt mit dem Radialbund 20 geschoben, und die Spannschrauben 50 werden eingeführt. In dieser Phase liegt zwischen der Spannfläche 38 und der äußeren Stirnseite 30 der Schleifscheibe 12 ein axialer Spalt vor.

Durch gleichmäßiges Anziehen der Spannschrauben 50 wandert das Adapterteil 34, d. h. einerseits die Spannplatte 36 und andererseits der Axialfortsatz 40 gemäß Fig. 1 nach rechts, wobei der Axialfortsatz auf dem Außenkonus 24 des Zentrierdorns 18 aufläuft. Durch die radiale Elastizität des Axialfortsatzes 40 kann sich dieser radial nach außen gleichmäßig aufweiten, wodurch das Spiel zwischen der Außenoberfläche 44 des Axialfortsatzes und der Innenoberfläche 16 der zylindrischen Ausnehmung allmählich aufgebraucht wird. Die sich gegenüberliegenden zylindrischen Flächen werden mit zunehmender Kraft und unter Beibehaltung der zentrierten Lagezuordnung mit immer größerer Kraft gegeneinander gespannt, bis schließlich die Spannfläche 38 an der Stirnseite 30 der Schleifscheibe 12 anschlägt. Durch Weiterdrehen der Spannschrauben 50 erfolgt nicht nur eine weitere Radialverspannung der Schleifscheibe 12 auf dem Zentrierdorn 18, sondern darüberhinaus auch eine zunehmende axiale Verspannung. Da durch die vorstehend beschriebene Spannmimik ausschließlich senkrecht zur Achse 14 gestirnte Flächen in satter Anlage miteinander stehen, wird durch die zunehmende axiale Verspannung der positive Zentriereffekt verstärkt, und es wird mit großer Sicherheit ein übermäßiger Planschlag eliminiert.

Man erkennt aus der Darstellung gemäß Fig. 1, daß der Axialfortsatz 40 den Raum zwischen dem Zentrierdorn 18 und der Innenausnehmung 16 der Schleifscheibe 12 quasi vollständig ausfüllt, um die axiale Verspannung der Schleifscheibe 12 noch verbessern zu können, ist es von Vorteil, den Zentrierdorn 18 bezüglich seiner Abmessungen derart auf die übrige Geometrie des Axialfortsatzes einerseits und der Schleifscheibe 12 andererseits abzustimmen, daß in der letzten Phase des Aufspannvorgangs beim weiteren Eintreiben des Axialfortsatzes 40 eine elastische, radiale Verformung des Zentrierdorns 18 nach innen auftritt. Auf diese Weise erreicht die Spannfläche 38 mit Sicherheit die äußere Stirnfläche 30 der Schleifscheibe 12, wodurch der axiale Fixiervorgang abgeschlossen wird.

Bei der Ausgestaltung nach Fig. 1 wird die radiale Elastizität des Axialfortsatzes 40 dadurch hergestellt, daß der Axialfortsatz sehr dünnwandig ausgeführt wird und daß im Übergangsbereich 48 zur Spannplatte 36 eine umlaufende Schwächungslinie vorgesehen wird. Die Elastizität kann allerdings auch auf andere Weise bereitgestellt bzw. gesteuert werden, so z. B. durch einen axialen oder wendelförmig verlaufenden Schlitz bzw. durch mehrere, den Axialfortsatz schwächende Linien, vorzugsweise in Form von zumindest einer Nut, die sich entweder axial oder wendelförmig entweder auf der Außenseite oder auf der Innenseite des Axialfortsatzes 40 erstreckt.

Zum Lösen der Verbindung werden zunächst die Spannschrauben 50 entfernt. Durch gleichmäßiges Betätigen der Abdrückschrauben 56 wird das Adapterteil bzw. der Adapter 36 gemäß Fig. 1 nach links bewegt. Der Axialfortsatz 40 zieht sich wieder radial nach innen zusammen und die Spielpassung zwischen der Außenoberfläche 44 des Axialfortsatzes 40 und der Innenoberfläche 16 der Ausnehmung in der Schleifscheibe 12 wird wieder hergestellt. Die Schleifscheibe 12 kann damit kraftlos vom Adapter abgezogen werden.

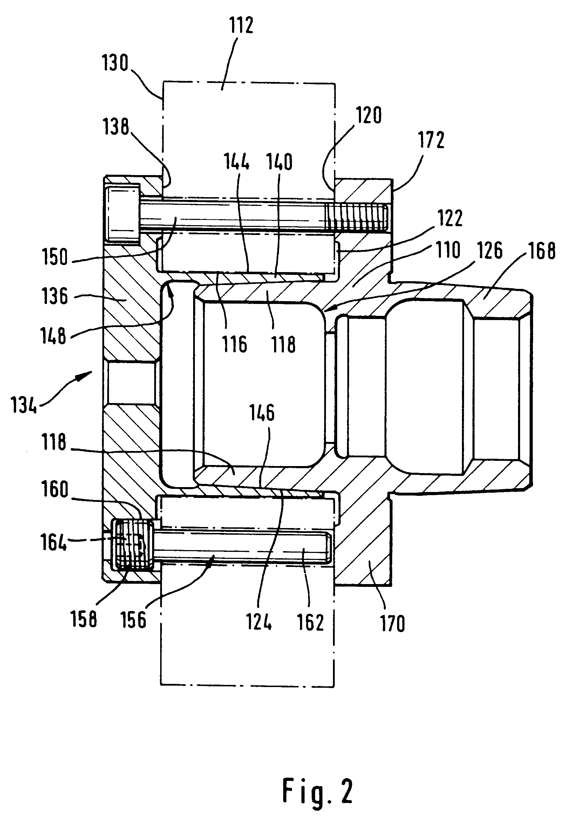

Die Ausführungsform nach Fig. 2 unterscheidet sich von derjenigen nach Fig. 1 lediglich dadurch, daß ein anderes Trägerteil für die Schleifscheibe 12 vorgesehen ist. Aus diesem Grunde entfällt auch eine Beschreibung der Spannplatte und des Adapterteils. Diejenigen Komponenten, die mit den Elementen der Ausführungsform nach Fig. 1 vergleichbar sind, sind in Fig. 2 mit ähnlichen Bezugszeichen bezeichnet, denen lediglich eine "1" vorangestellt ist.

Man erkennt aus Fig. 2, daß das Trägerteil 110 auf der dem Zentrierdorn 118 abgewandten Seite einen Hohlschaft 168 trägt, über den das Trägerteil 110 an eine weitere Komponente eines Werkzeug-Spannsystems ankoppelbar ist. Der Hohlschaft 168 kann verschiedenste Formgebung haben und beispielsweise auf der Außenseite konisch ausgebildet sein. Der Radialbund 120 ist somit bei der Ausgestaltung nach Fig. 2 an einer Radialplatte 170 angebracht, die auf der dem Radialbund 20 abgewandten Seite eine weitere Stirnfläche 172 ausbildet, über die unter Zuhilfenahme des Hohlschaftes 168 und geeigneter in dessen inneren aufgenommener Spannmittel eine axial feste und zentrierte Verspannung mit dem anschließenden Maschinenteil erfolgt. Die Ausgestaltung in Fig. 2 hat im Vergleich zu derjenigen gemäß Fig. 1 den Vorteil, daß die Schleifscheibe 112 mit vorgegebenem Durchmesser der Innenausnehmung 116 mit unterschiedlichen Aufnahmedurchmessern auf seiten der Spindel kombiniert werden kann.

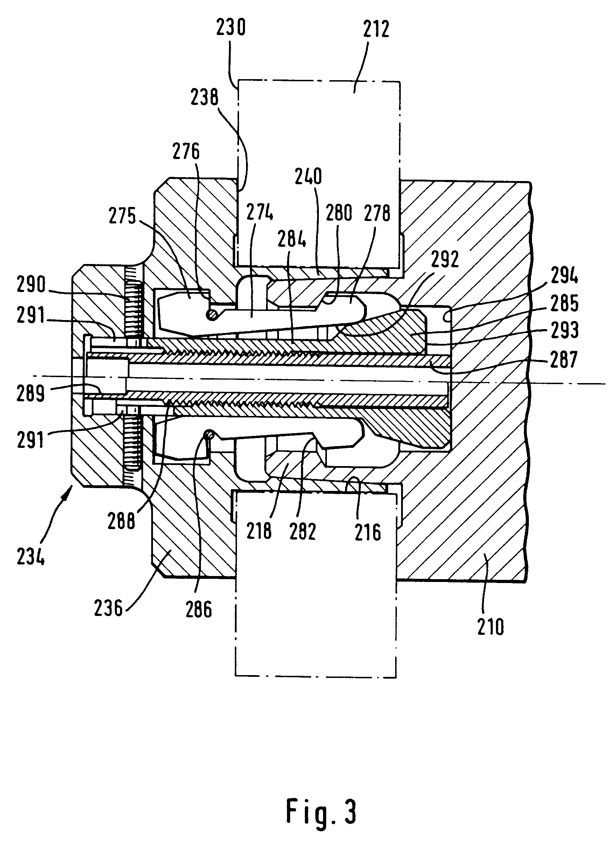

Die Ausführungsformen nach den Figuren 3 bis 5 unterscheiden sich von den zuvor beschriebenen dadurch, daß zentrale Spannmittel zum Aufziehen der Schleifscheibe verwendet werden, mit der Besonderheit, daß das Aufspannen und Abziehen der Schleifscheibe mit einer einzigen Drehbewegung von statten geht. Auch bei den Ausführungsformen nach den Figuren 3 bis 5 sind Komponenten, die den Bauteilen der vorstehend beschriebenen Ausführungsformen entsprechen, mit ähnlichen Bezugszeichen versehen, denen eine "2", "3" bzw. "4" vorangestellt ist.

Bei der Ausführungsform nach Fig. 3 nimmt der Adapter 234 in seinem Inneren mehrere, über den Umfang gleichmäßig verteilte Spannkörper 274 auf, die sich mit einem Halteabschnitt 275 an einer Innenschulter 276 des Adapters 234 abstützen und an ihrem anderen, axial versetzten Ende einen Klauenabschnitt 278 ausbilden, der zum Aufbringen einer axialen Spannkraft mit einer Innenschulter 280 des als Hohlschaft ausgebildeten Zentrierdorns 218 in Eingriff bringbar ist. Die Anordnung ist vorzugsweise derart getroffen, daß sich die Innenschulter 280 an eine Spannfläche 282 mit zunehmender Radialbewegung des Klauenabschnitts 278 nach außen satt aneinander legen, wobei über die konische Gestaltung der in Kontakt befindlichen Stützflächen am Klauenabschnitt 278 einerseits und der Innenschulter 280 andererseits eine Kraftverstärkung stattfindet.

Die Spannkörper 274 sind durch eine Hülse 284, an deren Ende ein Konus 285 ausgebildet ist, mit ihren Klauenabschnitten 278 synchron radial nach außen bzw. nach innen bewegbar, wobei für die Rückbewegung eine Ringfeder 286 vorgesehen ist. Die Fläche des Konus 285 ist so an die Form und die Lage der Spannkörper 274 im aufgezogenen Zustand der Schleifscheibe 212 angepaßt, daß vorzugsweise im gespannten Zustand eine flächige Anlage des Konus 285 auf der Innenseite der Klauenabschnitte 278 anliegt, wobei über die Neigung des Konus eine weitere Kraftübersetzung vorgenommen wird.

Die Bewegung des Konus 285 und der Hülse 284 in axialer Richtung erfolgt mittels einer zentrisch angeordneten Hohlschraube 287, deren Außengewinde 288 in Eingriff mit einem Innengewinde der Hülse 284 steht und die auf der gemäß Fig. 3 linken Seite eine Innensechskantausnehmung 289 für das Eingreifen eines axial anzusetzenden Werkzeugs ausbildet. Mit 290 sind Radialstifte bezeichnet, die mit Passung in Axialnuten 291 der Hülse 284 eingreifen, um letztere gegen Verdrehen zu sichern.

Wenn die Hohlschraube 287 in der einen Richtung gedreht wird, wird der Konus 285 gemäß Fig. 3 nach links angetrieben und läuft mit seiner Außenoberfläche auf die Innenoberfläche 292 der Spannkörper 274 auf, wodurch letztere mit ihrem Klauenabschnitt nach außen gedrückt bzw. geschwenkt werden, bis sie die Innenschulter 280 berühren. Beim Weiterdrehen der Hohlschraube 287 wird die Anpreßkraft der Klauenabschnitte 278 an der Innenschulter zunehmend vergrößert, und über das von den Keilflächen gebildete Keilgetriebe wird das Adapterteil 234 - wie vorstehend anhand der Ausführungsform gemäß Fig. 1 und 2 bereits beschrieben - allmählich gemäß Fig. 3 nach rechts bewegt. Hierbei wird der radial elastische Axialfortsatz 240 immer weiter in den Raum zwischen dem Hohlschaft 218 und der Innenausnehmung der Schleifscheibe 212 eingetrieben, bis die Spannfläche 238 die linke Stirnseite 230 der Schleifscheibe 212 erreicht.

Auch bei der Ausgestaltung nach Fig. 3 ist durch eine geeignete Formgebung des Übergangs zwischen dem Hohlschaft 218 und dem eigentlichen massiven Trägerteil 210 dafür Sorge getragen, daß in der letzten Spannphase eine gewisse radiale Elastizität des Hohlschaftes 218 gegeben ist.

Wenn die Schleifscheibe 212 vom Trägerteil 210 abgenommen werden soll, wird die Hohlschraube 287 in entgegengesetzter Richtung gedreht. Der Konus 285 bewegt sich damit gemäß Fig. 3 nach rechts, so daß der Flächenkontakt zwischen der Außenkonusfläche und der Innenfläche 284 der Spannkörper 274 gelöst wird. Durch die Ringfeder 276 schwenken die Spannkörßer 274 nach innen, wodurch die Klauenabschnitte 278 außer Eingriff mit der hinterschnittenen Schulter 280 gelangen. In Fig. 3 ist in der unteren Hälfte der Zustand bzw. die Lage der Spannkörper 274 in der gelösten Stellung gezeigt. Man erkennt, daß der Klauenabschnitt 278 weit genug radial nach innen bewegt ist, um ein Abziehen des Adapters 234 vom Trägerteil 210 zu ermöglichen. Beim Weiterdrehen der Hohlschraube 287 schlägt eine Stirnfläche 293 gegen einen Ausnehmungsgrund 294, wodurch über die Hülse 284 eine Abdrückkraft auf den Adapter 234 übertragen wird. Der Adapter wird damit zusammen mit dem Axialfortsatz 240 von der gemäß Fig. 3 linken Stirnseite 230 weg bewegt. Der Axialfortsatz federt daraufhin elastisch radial nach innen, wodurch die Spielpassung zwischen der Außenoberfläche des Axialfortsatzes 240 und der Innenoberfläche der Ausnehmung 216 wieder hergestellt wird. Der Adapter kann dann mit der Schleifscheibe 212 kraftfrei abgenommen werden.

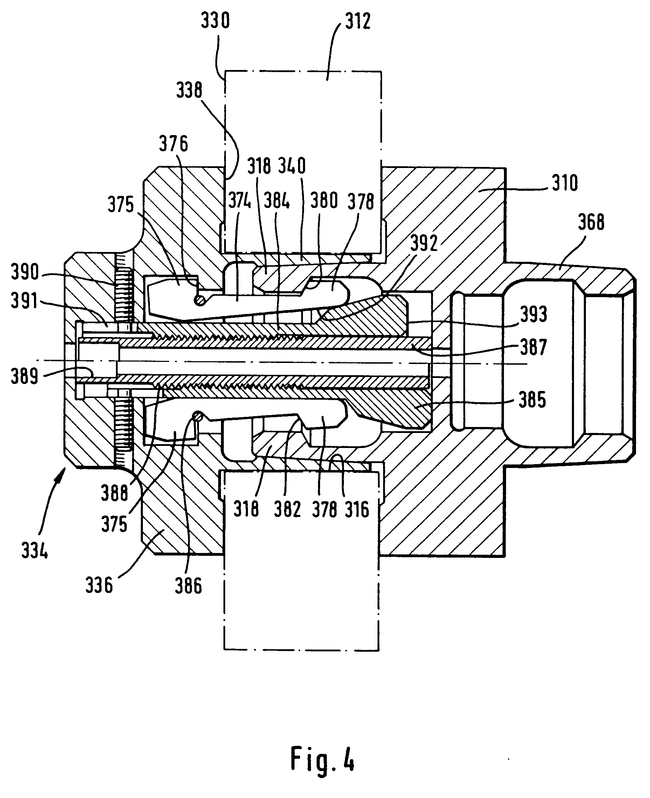

Die Ausgestaltung nach Fig. 4 unterscheidet sich von derjenigen gemäß Fig. 3 lediglich darin, daß das Trägerteil 310 wiederum nicht von einer Spindel, sondern von einem Zwischenmodul 310 gebildet ist, der auf der dem Zentrierdorn 318 abgewandten Seite einen weiteren Hohlschaft 368 trägt, der mit dem Hohlschaft 168 der Ausführungsform gemäß Fig. 2 vergleichbar ist. Für die Ausführungsform nach Fig. 4 gelten dementsprechend auch die gleichen Vorteile wie für diejenige Ausführungsform gemäß Fig. 2. Im einzelnen läßt sich das Teil 310 als Zwischenadapter nutzen, um die Schleifscheibe 312 an unterschiedliche Aufnahmen anbringen zu können.

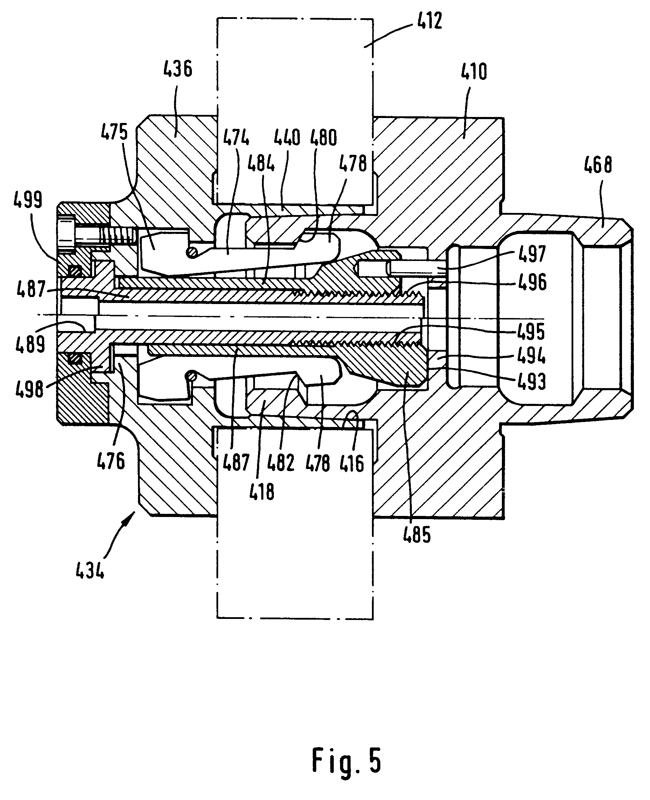

Während bei der Ausführungsform nach Fig. 4 beim Spannvorgang ein Nebenkraftfluß durch die Abstützung der Hohlschraube am Teil 310 auftritt, hat die Ausführungsform nach Fig. 5 den Vorteil, daß der Nebenkraftfluß in Richtung der Axialspannkraft wirkt, wodurch höhere Spannkräfte erzielt werden. Auch bei dieser Ausführungsform sind Elemente, die mit den Bauteilen vorstehend beschriebener Ausgestaltungen vergleichbar sind, mit ähnlichen Bezugszeichen versehen, denen eine "4" vorangestellt ist.

Der Adapter 434 ist bei dieser Ausführungsform zweiteilig ausgebildet. Im Inneren der Spannplatte 436 sind wiederum gleichmäßig über den Umfang verteilte Spannkörper 474 aufgenommen, und zwar verliersicher dadurch, daß sie sich radial innen auf der Spannhülse 484 abstützen. Abweichend von den vorstehend beschriebenen Ausführungsformen nach Fig. 3 und 4 hat die Hülse 484 im Bereich des Konus 485 ein Innengewinde 495, das mit einem Außengewinde 496 der Hohlschraube 487 in Eingriff steht. Ein Axialstift ist mit 497 bezeichnet, und dieser greift in eine stirnseitige Bohrung im Konus 485 ein, um die Hülse 484 gegen Verdrehen zu sichern.

Die Hohlschraube 487 hat einen Radialbund 498, über den sie unter Zuhilfenahme einer Platte 499 in axialer Richtung aber drehbar am Adapter 436 gehalten ist. Die Platte 499 ist mit dem Adapter 436 verschraubt.

Mit 489 ist eine Innensechskant-Ausnehmung zum Ansetzen eines geeigneten Werkzeugs bezeichnet, um die Hohlschraube 487 zur Bewegung der Hülse 484 antreiben zu können.

Auch bei dieser Ausführungsform wird der Konus 485 als Abdrückmittel herangezogen, was der unteren Hälfte der Fig. 5 entnehmbar ist. Bei Bewegung des Konus 485 nach rechts schlägt die Stirnseite 493 des Konus 485 an eine Schulter 494 des Trägerteils 410, wodurch die Abdrückkraft eingeleitet wird.

Selbstverständlich sind Abweichungen von den zuvor beschriebenen Ausführungsformen möglich, ohne den Grundgedanken der Erfindung zu verlassen. So ist es beispielsweise auch möglich, den Axialfortsatz auf der Innenseite mit einem Zylinder und auf der Außenseite mit einem Konus auszustatten. Wenngleich die vorstehend beschriebenen Ausführungsformen einen satten flächigen Kontakt zwischen Schleifscheibe und Axialfortsatz einerseits und zwischen Axialfortsatz und Zentrierdorn andererseits zeigen, so ist hervorzuheben, daß es nicht unbedingt erforderlich ist, einen vollflächigen Kontakt herzustellen. Gleiches gilt auch für die Ausgestaltung des Keilgetriebes. Schließlich kann auch die Spannfläche 38 bzw. 138, 238, 338 und 438 von einer Konusfläche gebildet sein. Auch für die axiale Flächungslinie des Axialfortsatzes bietet sich eine Vielfalt von Variationen an, die auch einen axialen Schlitz bzw. einen Schlitz erfassen, der entweder eine geradlinige oder eine wendelförmige axiale Erstreckung hat.

Die Erfindung schafft somit eine Vorrichtung zur zentrierten und axial fixierten Aufnahme eines rotierenden Körpers, insbesondere einer Schleifscheibe, auf einem Trägerteil, das einen in eine zentrische Aufnahmeöffnung des rotierenden Körpers ragenden, axialen Zentrierdorn und einen daran anschließenden, im wesentlichen radialen Bund aufweist, gegen den der rotierende Körper axial spannbar ist. Zum hochgenauen Aufspannen extrem schnell rotierender Körper mittels einfacher Handgriffe ist zwischen den Zentrierdorn und der Aufnahmeöffnung ein elastisch aufweitbarer, vorzugsweise dünnwandiger Axialfortsatz angeordnet, der sich einerseits an der Außenoberfläche des Zentrierdorns und andererseits an der Innenoberfläche der Aufnahmeöffnung abstützt und einstückig mit einer Spannplatte zu einem Adapterteil verbunden ist. Im Adapterteil sind vorzugsweise verliersicher Spannmittel aufgenommen, mit denen unter Abstützung am Adapterteil und am Trägerteil die Spannplatte mit einem Radialbund unter elastischer Aufweitung des Axialfortsatzes gegen den rotierenden Körper drückbar ist.

## Patentansprüche

1. Anordnung, mit der ein rotierender Körper (12; 112; 212; 312; 412), insbesondere eine Schleifscheibe zentriert und axial fixiert an einem Trägerteil (10; 110; 210; 310; 410) festgehalten wird, das einen in eine zentrische Aufnahmeöffnung (16; 116; 216; 316; 416) des rotierenden Körpers (12) ragenden, axialen Zentrierdorn (18) und einen daran anschließenden, im wesentlichen radialen Bund (20; 120) aufweist, an dem der rotierende Körper (12) axial anliegt, wobei zwischen dem Zentrierdorn (18) und der Aufnahmeöffnung (16) ein **radial** elastisches **Ringteil** angeordnet ist, **das** sich einerseits an der Außenoberfläche (24) des Zentrierdorns (18) und andererseits an der Innenoberfläche der Aufnahmeöffnung (16) abstützt, und wobei Spannmittel (50; 274 bis 291; 374 bis 391; 474 bis 491) vorgesehen sind, mit denen **das Ringteil** unter radialer elastischer Aufweitung auf den Zentrierdorn (18) zu preßbar ist,
**dadurch gekennzeichnet, daß**
**das Ringteil als** dünnwandiger Axialfortsatz (40) **einer Spannplatte (36; 136; 236; 336; 436) ausgebildet ist und** einstückig mit **dieser** den Axialfortsatz (40) radial nach außen überragenden Spannplatte (36; 136; 236; 336; 436) zu einem Adapter (34; 134; 234; 334; 434) verbunden ist, in dem die Spannmittel (50; 274 bis 291; 374 bis 391; 474 bis 491) aufgenommen sind, die sich einerseits am Adapter (34) und andererseits an dem Trägerteil (10) abstützen, wobei die Spannplatte (36) mit einem sich radial nach außen erstreckenden Radialbund (38; 138; 238; 338; 438) unter elastischer Aufweitung des Axialfortsatzes (40) gegen den rotierenden Körper (12; 112; 212; 312; 412) drückbar ist, wodurch eine axiale Spannung gegen den radialen Bund (20) erfolgt.

2. Anordnung nach Anspruch 1, **dadurch gekennzeichnet, daß** die Aufnahmeöffnung (16) des rotierenden Körpers (12) zylindrisch ausgebildet ist und der Zentrierdorn (18) eine konische Außenoberfläche (24) hat.

3. Anordnung nach Anspruch 1 oder 2, **dadurch gekennzeichnet, daß** der Axialfortsatz (40) zumindest eine Schwächungslinie (48) hat, mit der die radiale Elastizität steuerbar ist.

4. Anordnung nach einem der Ansprüche 1 bis 3, **dadurch gekennzeichnet, daß** der Zentrierdorn (18; 218) an einer Maschinenspindel (10; 210) angebracht ist.

5. Anordnung nach einem der Ansprüche 1 bis 3, **dadurch gekennzeichnet, daß** der Zentrierdorn (118; 318; 418) an einem Werkzeugsystemmodul (110; 310; 410) angebracht ist, der auf der dem Zentrierdorn (118; 318; 418) abgewandten Seite einen weiteren Zentrierfortsatz (168; 368; 468) zur Ankopplung an einen Werkzeug- oder Werkstückträger ausbildet.

6. Anordnung nach einem der Ansprüche 1 bis 5, **dadurch gekennzeichnet, daß** der Zentrierdorn (18; 118; 218; 318; 418) von einem Hohlschaft (168) gebildet ist.

7. Anordnung nach einem der Ansprüche 1 bis 6, **dadurch gekennzeichnet, daß** die Spannmittel (50) von im gleichmäßigem Umfangsabstand zueinander stehenden Axial-Spannschrauben (50) gebildet sind, die sich durch entsprechende Axialausnehmungen in der Spannplatte (36) und im rotierenden Körper (12) erstrecken und mit zugehörigen Gewindebohrungen im radialen Bund (20) des Trägerteils (10) in Eingriff bringbar sind.

8. Anordnung nach Anspruch 7, **dadurch gekennzeichnet, daß** mehrere, über den Umfang gleichmäßig verteilte Abdrückschrauben (56) vorgesehen sind, deren Gewindeabschnitt (58) mit der Spannplatte (36) in Eingriff steht und deren Schaftabschnitt (62) sich durch eine zugehörige Axialausnehmung (54) im rotierenden Körper (12) erstreckt.

9. Anordnung nach Anspruch 6, **dadurch gekennzeichnet, daß** der Hohlschaft (218; 318; 418) eine vorzugsweise umlaufende Innenschulter (280) aufweist, gegen die über den Umfang gleichmäßig verteilte Spannkörper (274; 374; 474) drückbar sind, welche sich an einem Teil des Adapterteils (34) abstützen und durch ein von der Außenseite des Adapterteils (34) betätigbares Stellteil (287; 387; 487) radial nach außen in zunehmend festen Eingriff mit der Innenschulter (280) bewegbar sind.

10. Anordnung nach Anspruch 9, **dadurch gekennzeichnet, daß** die Innenschulter (280) von einer Konusfläche (280; 380; 480) gebildet ist, auf die die Spannkörper (274; 374; 474) bei radialer Bewegung nach außen auflaufen.

11. Anordnung nach Anspruch 9 oder 10, **dadurch gekennzeichnet, daß** die Spannkörper (274; 374; 474) Bestandteil von klammerartig ausgebildeten Spannelementen (274; 374; 474) sind, die axial zum Spannkörper (274; 374; 474) versetzt einen Halteabschnitt (275; 375; 475) ausbilden, mit dem sie sich in axialer Richtung am Adapterteil (234; 334; 434) abstützen.

12. Anordnung nach Anspruch 11, **dadurch gekennzeichnet, daß** die Spannelemente (274; 374; 474) im wesentlichen die Form eines U haben, dessen Schenkel (275; 278) den Halteabschnitt (275) und den Klauenabschnit (278) ausbilden und dessen Steg sich in axialer Richtung über die Fügestelle zwischen Trägerteil (10) und Adapterteil (234) erstreckt, in dem eine hinterschnittene Radialschulter (276; 376; 476) zur Abstützung der Halteabschnitte (275; 375; 475) ausgebildet ist.

13. Anordnung nach einem der Ansprüche 9 bis 12, **dadurch gekennzeichnet, daß** sich die Spannkörper (274; 374; 474) radial innen auf einem Konus (285; 385; 485) abstützen, der mittels eines von außen betätigbaren Getriebes (284; 287; 288) axial antreibbar ist, um die Spannkörper (274; 374; 474) mit gesteuerter Kraft in radialer Richtung anzutreiben.

14. Anordnung nach Anspruch 13, **dadurch gekennzeichnet, daß** der Konus (285; 385; 485) am innenliegenden Ende einer Hülse (284; 384; 484) sitzt, die sich in axialer Richtung erstreckt und die Schenkel (275; 278) der Spannelemente (274; 374; 474) abstützt.

15. Anordnung nach Anspruch 14, **dadurch gekennzeichnet, daß** für den Konus (285; 385; 485) eine Verdrehsicherung (290; 390; 497) vorgesehen ist.

16. Anordnung nach Anspruch 14 oder 15, **dadurch gekennzeichnet, daß** die Hülse (284) in Gewindeeingriff mit einer sich zentral erstreckenden Schraube (287) steht, die sich auf einer Seite an einer Radialwand (294) des Trägerteils (210) und auf der anderen Seite an einer Schulter des Adapterteils (234) abstützt und dort eine Innenausnehmung (289; 389) für den Eingriff eines axial von außen zentral einführbaren Betätigungswerkzeugs ausbildet.

17. Anordnung nach Anspruch 14 oder 15, **dadurch gekennzeichnet, daß** die Hülse (484) im Bereich des Konus (485) ein Innengewinde (495) trägt, das im Eingriff mit einer sich in axialer Richtung erstreckenden Schraube (487) steht, deren Kopf (498) axial fixiert drehbar im Adapterteil (434) gelagert ist, wobei vorzugsweise für die innenliegende Stirnfläche (493) des Konus (485) am Trägerteil (410) eine Radialschulter (494) vorgesehen ist, gegen die der Konus zur Erzeugung einer Abdrückkraft drückbar ist.

18. Adapter für eine radial- und axialfeste Aufspannung eines rotierenden Körpers (12; 112; 212; 312; 412), insbesondere einer Schleifscheibe, auf ein Trägerteil (10; 110; 210; 310; 410), das einen in eine zentrische Aufnahmeöffnung (16) des rotierenden Körpers (12) einführbaren, axialen Zentrierdorn (18) und einen daran anschließenden, im wesentlichen radialen Bund (20) aufweist, der in axiale Anlage mit dem rotierenden Körper (12) bringbar ist, wobei der Adapter (34) eine **radial** elastisches **Ringteil** mit einer einerseits an die Außenoberfläche (24) des Zentrierdorns (18) und andererseits an die Innenoberfläche der Aufnahmeöffnung (16) angepaßten und an diese Flächen anschmiegbaren Oberfläche aufweist,
**dadurch gekennzeichnet, daß**
**das Ringteil als** dünnwandiger Axialfortsatz (40) **einer Spannplatte (36) ausgebildet ist und** einstückig mit **dieser** den Axialfortsatz (40) radial nach außen überragenden Spannplatte (36) verbunden ist, in der Spannmittel (50; 274 bis 291) zur axialen Verspannung von Adapter (34) und Trägerteil (10) vorzugsweise verliersicher aufgenommen sind, mit denen unter Abstützung am Adapter (34) und an dem Trägerteil (10) die Spannplatte (36) mit einem Radialbund (38) unter elastischer Aufweitung des Axialfortsatzes (40) gegen den rotierenden Körper (12) drückbar ist, wodurch eine Spannung gegen den radialen Bund (20) erzielbar ist.

19. Adapter nach Anspruch 18, **dadurch gekennzeichnet, daß** der Axialfortsatz (40) zumindest eine Schwächungslinie (48) hat, mit der die radiale Elastizität steuerbar ist.

20. Adapter nach Anspruch 18 oder 19, **dadurch gekennzeichnet, daß** die Spannmittel (50) von im gleichmäßigem Umfangsabstand zueinander stehenden Axial-Spannschrauben gebildet sind.

21. Adapter nach Anspruch 20, **dadurch gekennzeichnet, daß** mehrere, über den Umfang gleichmäßig verteilte Abdrückschrauben (56) vorgesehen sind, deren Gewindeabschnitt (60) mit der Spannplatte (36) in Eingriff steht

22. Adapter nach Anspruch 18 oder 19, **dadurch gekennzeichnet, daß** mehrere über den Umfang gleichmäßig verteilte Spannkörper (274; 374; 474) vorgesehen sind, welche sich an einem Teil des Adapters (234) abstützen und durch ein von der Außenseite des Adapters (234) betätigbares Stellteil (285; 385; 485) radial nach außen in zunehmend festen Eingriff mit der Innenschulter (276) bewegbar sind.

23. Adapter nach Anspruch 22, **dadurch gekennzeichnet, daß** die Spannkörper (274; 374; 474) Bestandteil von klammerartig ausgebildeten Spannelementen sind, die axial zum Spannkörper versetzt einen Halteabschnitt (275) ausbilden, mit dem sie sich in axialer Richtung am Adapter (234) abstützen.

24. Adapter nach Anspruch 23, **dadurch gekennzeichnet, daß** die Spannelemente im wesentlichen die Form eines U haben, dessen Schenkel (275; 278) den Halteabschnitt (275) und den Klauenabschnitt (278) ausbilden und dessen Steg sich in axialer Richtung vom Inneren des Axialfortsatzes (40) über einen radial nach innen vorstehenden Vorsprung in eine hinterschnittene Nut zur Abstützung der Halteabschnitte (275) erstreckt.

25. Adapter nach Anspruch 23 oder 24, **dadurch gekennzeichnet, daß** sich die Spannkörper (274; 374; 474) radial innen auf einem Konus (285) abstützen, der mittels eines von außen betätigbaren Getriebes (284; 287; 288) axial antreibbar ist, um die Spannkörper (274; 374; 474) mit gesteuerter Kraft in radialer Richtung anzutreiben.

26. Adapter nach Anspruch 25, **dadurch gekennzeichnet, daß** der Konus (285) am innenliegenden Ende einer Hülse (284) sitzt, die sich in axialer Richtung erstreckt und die Schenkel (275; 278) der Spannkörper (274) abstützt.

27. Adapter nach Anspruch 26, **dadurch gekennzeichnet, daß** für den Konus (285; 385; 485) eine Verdrehsicherung (290; 390; 490) vorgesehen ist.

28. Adapter nach Anspruch 26 oder 27, **dadurch gekennzeichnet, daß** die Hülse (284) in Gewindeeingriff mit einer sich zentral erstreckenden Schraube (287) steht, die auf der der Spannplatte (236) zugewandten Seite eine Innenausnehmung (289, 389) für den Eingriff eines axial von außen zentral einführbaren Betätigungswerkzeugs hat.

29. Adapter nach Anspruch 26 oder 27, **dadurch gekennzeichnet, daß** die Hülse (484) im Bereich des Konus (485) ein Innengewinde (495) trägt, das im Eingriff mit einer sich in axialer Richtung erstreckenden Schraube (487) steht, deren Kopf (498) axial fixiert drehbar im Adapter (434) gelagert ist, wobei vorzugsweise für die innenliegende Stirnfläche (493) des Konus (485) am Trägerteil (410) eine Radialschulter (494) vorgesehen ist, gegen die der Konus (485) zur Erzeugung einer Abdrückkraft drückbar ist.

## Claims

1. An arrangement by means of which a rotating body (12; 112; 212; 312; 412), more particularly a grinding wheel, is retained so as to be centred and axially fixed on a carrier part (10; 110; 210; 310; 410), which comprises an axial centring mandrel (18) projecting into a central mounting opening (16; 116; 216; 316; 416) of the rotating body (12), and a substantially radial collar (20; 120) following the centring mandrel, the rotating body (12) abutting said radial collar axially, a radially elastic annular part being disposed between the centring mandrel (18) and the mounting opening (16), said annular part bearing, on the one hand, against the outer surface (24) of the centring mandrel (18) and, on the other hand, against the inner surface of the mounting opening (16), clamping means (50; 274 to 291; 374 to 391; 474 to 491) being provided, by means of which the annular part can be pressed on to the centring mandrel (18) with radial elastic expansion,
characterised in that
the annular part is constructed as a thin-walled axial projection (40) of a clamping plate (36; 136; 236; 336; 436) and is integrally connected to said clamping plate (36; 136; 236; 336; 436), which projects radially outwards beyond the axial projection (40), so as to form an adapter (34; 134; 234; 334; 434), in which the clamping means (50; 274 to 291; 374 to 391; 474 to 491) are accommodated, which on the one hand bear against the adapter (34) and on the other hand against the carrier part (10), the clamping plate (36) being adapted to be pressed by a radially outwardly extending radial collar (38; 138; 238; 338; 438) against the rotating body (12; 112; 212; 312; 412) with elastic expansion of the axial projection (40), so that axial clamping against the radial collar (20) takes place.

2. An arrangement according to claim 1, characterised in that the mounting opening (16) of the rotating body (12) is cylindrical and the centring mandrel (18) has a conical outer surface (24).

3. An arrangement according to claim 1 or 2, characterised in that the axial projection (40) has at least one weakening line (48) by means of which the radial elasticity is controllable.

4. An arrangement according to any one of claims 1 to 3, characterised in that the centring mandrel (18; 218) is disposed on a machine spindle (10; 210).

5. An arrangement according to any one of claims 1 to 3, characterised in that the centring mandrel (118; 318; 418) is mounted on a tool system module (110; 310; 410) which on the side remote from the centring mandrel (118; 318; 418) forms another centring projection (168; 368; 468) for coupling to a tool or workpiece carrier.

6. An arrangement according to any one of claims 1 to 5, characterised in that the centring mandrel (18; 118; 218; 318; 418) is formed by a hollow shank (168).

7. An arrangement according to any one of claims 1 to 6, characterised in that the clamping means (50) are formed by axial clamping screws (50) which are in uniform peripherally spaced relationship and which extend through corresponding axial openings in the clamping plate (36) and in the rotating body (12) and are adapted to be brought into engagement with associated screwthreaded bores in the radial collar (20) of the carrier part (10).

8. An arrangement according to claim 7, characterised in that a plurality of thrust screws (56) are provided with are distributed uniformly over the periphery and the screwthreaded portion (58) of which is in engagement with the clamping plate (36) and the shaft portion (62) of which extends through an associated axial opening (54) in the rotating body (12).

9. An arrangement according to claim 6, characterised in that the hollow shank (218; 318; 418) has a preferably continuous inner shoulder (280) against which the clamping members (274; 374; 474) distributed uniformly over the periphery can be pressed, which members bear against a part of the adapter part (34) and are movable radially outwards in increasingly tight engagement with the inner shoulder (280) by means of an adjusting part (287; 387; 487) adapted to be actuated from the outside of the adapter part (34).

10. An arrangement according to claim 9, characterised in that the inner shoulder (280) is formed by a conical surface (280; 380; 480) on which the clamping members (274; 374; 474) run in the outward direction on radial movement.

11. An arrangement according to claim 9 or 10, characterised in that the clamping members (274; 374; 474) are part of clamping elements (274; 374; 474) constructed in the form of clamps which, axially offset from the clamping member (274; 374; 474), form a retaining portion (275; 375; 475) by means of which they bear axially against the adapter part (234; 334; 434).

12. An arrangement according to claim 11, chracterised in that the clamping elements (274; 374; 474) are substantially in the form of a U, the arms (275; 278) of which form the retaining portion (275) and the claw portion (278) and the web of which extends axially over the joint between the carrier part (10) and the adapter part (234), in which an undercut radial shoulder (276; 376; 476) is formed to support the retaining portions (275; 375; 475).

13. An arrangement according to any one of claims 9 to 12, characterised in that the clamping members (274; 374; 474) bear radially inwards on a cone (285; 385; 485) which is adapted to be axially driven by a transmission (284; 287; 288) adapted to be actuated from outside, in order to drive the clamping members (274; 374; 474) radially with a controlled force.

14. An arrangement according to claim 13, characterised in that the cone (285; 385; 485) is located at the inner end of a bush (284; 384; 484) which extends axially and supports the arms (275; 278) of the clamping elements (274; 374; 474).

15. An arrangement according to claim 14, characterised in that a means (290; 390; 490) is provided to prevent the cone (285; 385; 485) from rotating.

16. An arrangement according to claim 14 or 15, characterised in that the bush (284) is in screwthreaded engagement with a centrally extending screw (287) which bears on one side against a radial wall (294) of the carrier part (210) and on the other side against a shoulder of the adapter part (234) where an inner recess (289; 389) is formed for engagement of an actuating tool adapted to be introduced centrally and axially from the exterior.

17. An arrangement according to claim 14 or 15, characterised in that the bush (484) has in the region of the cone (485) an internal screwthread (495) which is in engagement with an axially extending screw (487), the head (498) of which is mounted in the adapter part (434) for rotation but is axially fixed, a radial shoulder (494) preferably being provided for the inner end face (493) of the cone (485) on the carrier part (410), the cone being adapted to be pressed against said radial shoulder in order to produce a thrust force.

18. An adapter for the radially and axially fixed clamping of a rotating body (12; 112; 212; 312; 412), more particularly a grinding wheel, on a carrier part (10; 110; 210; 310; 410), which comprises an axial centring mandrel (18) adapted to be introduced into a central mounting opening (16) of the rotating body (12), and a substantially radial collar (20) following the said mandrel, said collar being adapted to be brought into axial abutment against the rotating body (12), the adapter (34) having a radially elastic annular part with a surface which, on the one hand, is adapted to the outer surface (24) of the centring mandrel (18) and, on the other hand, to the inner surface of the mounting opening (16), and which is adapted to engage to these surfaces,
characterised in that
the annular part is constructed as a thin-walled axial projection (40) of a clamping plate (36) and is integrally connected to said clamping plate (36) which projects radially outwards beyond she axial projection (40), in which clamping plate clamping means (50; 274 to 291) are received preferably so as to be captive for axial clamping of the adapter (34) and carrier part (10), the clamping plate (36) being pressable against the rotating body (12) by a radial collar (38) with elastic expansion of the axial projection (40), through the agency of said clamping means, being supported against the adapter (34) and the carrier part (10), so that clamping against the radial collar (20) can be obtained.

19. An adapter according to claim 18, characterised in that the axial projection (40) has at least one weakening line (48) by means of which the radial elasticity is controllable.

20. An adapter according to claim 18 or 19, characterised in that the clamping means (50) are formed by axial clamping screws in uniform peripheral spaced relationship to one another.

21. An adapter according to claim 20, characterised in that a plurality of thrust screws (56) are provided which are distributed uniformly over the periphery and the screwthreaded portion (60) of which is in engagement with the clamping plate (36).

22. An adapter according to claim 18 or 19, characterised in that a plurality of clamping members (274; 374; 474) are provided, which are distributed uniformly over the periphery and which bear against a part of the adapter (234) and are movable radially outwards in increasingly tight engagement with the inner shoulder (276) by means of an adjusting part (285; 385; 485) which is adapted to be actuated from the outside of the adapter (234).

23. An adapter according to claim 22, characterised in that the clamping members (274; 374; 474) are part of clamping elements constructed in the form of clamps which, axially offset from the clamping member, form a retaining portion (275) by means of which they bear axially against the adapter part (234).

24. An adapter according to claim 23, characterised in that the clamping elements are substantially in the form of a U, the arms (275; 278) of which form the retaining portion (275) and the claw portion (278) and the web of which extends axially from the interior of the axial projection (40) via a radially inwardly extending projection into an undercut groove to support the retaining portion (275).

25. An adapter according to claim 23 or 24, characterised in that the clamping members (274; 374; 474) bear radially inwards on a cone (285) which is adapted to be axially driven by a transmission (284; 287; 288) adapted to be actuated from outside, in order to drive the clamping members (274; 374; 474) radially with a controlled force.

26. An adapter according to claim 25, characterised in that the cone (285) is located at the inner end of a bush (284) which extends axially and supports the arms (275; 278) of the clamping elements (274).

27. An adapter according to claim 26, characterised in that a means (290; 390; 490) is provided to prevent the cone (285; 385; 485) from rotating.

28. An adapter according to claim 26 or 27, characterised in that the bush (284) is in screwthreaded engagement with a centrally extending screw (287) which on the side facing the clamping plate (236) has an inner recess (289; 389) for engagement of an actuating tool adapted to be introduced centrally and axially from the exterior.

29. An adapter according to claim 26 or 27, characterised in that the bush (484) has in the region of the cone (485) an internal screwthread (495) which is in engagement with an axially extending screw (487), the head (498) of which is mounted in the adapter part (434) for rotation but is axially fixed, a radial shoulder (494) preferably being provided for the inner end face (493) of the cone (485) on the carrier part (410), the cone being adapted to be pressed against said radial shoulder in order to produce a thrust force.

## Revendications

1. Agencement, à l'aide duquel un corps en rotation (12; 112; 212; 312; 412), en particulier un disque de meulage, est centré et fixé axialement sur une partie support (10; 110; 210; 310; 410), qui présente un mandrin de centrage axial (18), pénétrant dans une ouverture de logement centrée (16; 116; 216; 316; 416) du corps en rotation (12) et une collerette (20; 120) sensiblement radiale, s'y raccordant, sur laquelle le corps en rotation (12) appuie axialement, entre le mandrin de centrage (18) et l'ouverture de logement (16) étant disposée une partie annulaire élastique radialement qui prend appui, d'une part, sur la surface extérieure (24) du mandrin de centrage (18) et prend appui, d'autre part, sur la surface intérieure de l'ouverture de logement (16), des moyens de serrage (50; 274 à 291; 374 à 391; 474 à 491) étant prévus, à l'aide desquels la partie annulaire peut être pressée sur le mandrin de centrage (18), ceci étant accompagné d'un agrandissement élastique radial, caractérisé en ce que la partie annulaire est réalisée sous forme de prolongement axial (40) à paroi mince d'une plaque de serrage (36; 136; 236; 336; 436) et d'une plaque de serrage (36; 136; 236; 336; 436) sortant radialement vers l'extérieur, du prolongement axial (40), en étant reliée d'une seule pièce à celle-ci pour constituer un adaptateur (34; 134; 234; 334; 434), dans lequel les moyens de serrage (50; 274 à 291; 374 à 391; 474 à 491) sont logés, moyens de serrage prenant appui, d'une part, sur l'adaptateur (34) et, d'autre part, sur la partie support (10), la plaque de serrage (36) pouvant être pressée, avec une collerette radiale (38; 138; 238; 338; 438) s'étendant radialement vers l'extérieur avec un agrandissement élastique du prolongement axial (40), contre le corps en rotation (12; 112; 212; 312; 412), faisant qu'est générée un serrage axial contre la collerette radiale (20).

2. Agencement selon la revendication 1, caractérisé en ce que l'ouverture de logement (16) du corps en rotation (12) en rotation (12) est de réalisation cylindrique, et le mandrin de centrage (18) comporte une surface extérieure (24) conique.

3. Agencement selon la revendication 1 ou 2, caractérisé en ce que le prolongement axial (40) comporte au moins une ligne d'affaiblissement (48) à l'aide de laquelle on peut moduler l'élasticité radiale.

4. Agencement selon l'une des revendications 1 à 3, caractérisé en ce que le mandrin de centrage (18; 218) est monté sur une broche machine (10; 210).

5. Agencement selon l'une des revendications 1 à 3, caractérisé en ce que le mandrin de centrage (118; 318; 418) est monté sur un module de système d'outillage (10; 310; 410) qui constitue, sur le côté opposé au mandrin de centrage (118; 318; 418), un autre prolongement de centrage (168; 368; 468) destiné à l'accouplement à un porte-outil ou un porte-pièce.

6. Agencement selon l'une des revendications 1 à 5, caractérisé en ce que le mandrin de centrage (118; 218; 318; 418) est constitué par une tige creuse (168).

7. Agencement selon l'une des revendications 1 à 6, caractérisé en ce que les moyens de serrage (50) sont constitués par des vis de serrage axiales (50) espacées périphériquement, régulièrement, les unes des autres et s'étendant à travers des évidements axiaux correspondants, ménagés dans la plaque de serrage (36) et dans le corps en rotation (12) et pouvant être mises en contact avec des trous taraudés afférents, ménagés dans la collerette radiale (20) de la partie support (10).

8. Agencement selon la revendication 7, caractérisé en ce que plusieurs vis de pressage (56) réparties régulièrement sur la périphérie sont prévues, vis dont la section filerée (58) est en contact avec la plaque de serrage (36) et dont la section tige (62) s'étend dans le corps en rotation (12), en passant à travers l'évidement axial (54) afférent.

9. Agencement selon la revendication 6, caractérisé en ce que la tige creuse (218; 318; 418) présente un épaulement intérieur (280), de préférence faisant le pourtour, épaulement contre lequel les corps de serrage (274; 374; 474) répartis régulièrement sur la périphérie peuvent être pressés, en prenant appui sur une partie de la pièce adaptatrice (34) et en étant déplaçables, au moyen d'une partie de réglage (287; 387; 487) actionnable depuis la face extérieure de la pièce adaptatrice (34), le déplacement se faisant radialement vers l'extérieur en produisant un engagement de plus en plus ferme avec l'épaulement intérieur (280).

10. Agencement selon la revendication 9, caractérisé en ce que l'épaulement intérieur (280) est constitué par une surface conique (280; 380; 480) sur laquelle les corps de serrage (274; 374; 474) défilent lors du déplacement radial fait vers l'extérieur.

11. Agencement selon la revendication 9 ou 10, caractérisé en ce que les corps de serrage (274; 374; 474) font partie d'éléments de serrage (274; 374; 474) réalisés à la façon de crampons qui constituent, en étant décalés axialement par rapport au corps de serrage (274; 374; 474), une section de maintien (275; 375; 475) à l'aide de laquelle ils prennent appui en direction axiale sur la pièce adaptatrice (234; 334; 434).

12. Agencement selon la revendication 9 ou 10, caractérise en ce que les éléments de serrage (274; 374; 474) ont sensiblement la forme d'un U, dont les branches (275; 278) constituent la section de maintien (275) et la section à crampons (278), et dont l'âme s'étend en direction axiale sur le point de jointoiement entre partie support (10) et pièce adaptatrice (234), dans lequel est réalisé un épaulement radial (276; 376; 476) doté d'une contre-dépouille, en vue de l'appui des sections de maintien (275; 375; 475).

13. Agencement selon l'une des revendications 9 à 12, caractérisé en ce que les corps de serrage (274; 374; 474) prennent appui radialement intérieurement sur un cône (285; 385; 485), qui peut être entraîné axialement au moyen d'une transmission (284; 287; 288) actionnable depuis l'extérieur, pour entraîner en direction radiale les corps de serrage (274; 374; 474) avec une force modulée.

14. Agencement selon la revendication 13, caractérisé en ce que le cône (285; 385; 485) siège sur l'extrémité intérieure d'une douille (284; 384; 484), qui s'étend en direction axiale et qui soutient les branches (275; 278) des éléments de serrage (274; 374; 474).

15. Agencement selon la revendication 14, caractérisé en ce qu'une sécurité de rotation (290; 390; 497) est prévue pour le cône (285; 385; 485).

16. Agencement selon la revendication 14 ou 15, caractérisé en ce que la douille (284) est en prise par son filetage avec une vis (287) s'étendant centralement et prenant appui sur, un côté, sur une paroi radiale (294) de la partie support (210), et prenant appui de l'autre côté sur un épaulement de la pièce adaptatrice (234) et constituant, à cet endroit, un évidement intérieur (289; 389), pour l'engagement d'un outil d'actionnement pouvant être introduit centralement axialement depuis l'extérieur.

17. Agencement selon la revendication 14 ou 15, caractérisé en ce que la douille (284) porte, dans la zone du cône (485), un filetage intérieur (495) qui est en prise avec une vis (487) s'étendant en direction axiale, vis dont la tête (498) est montée de façon fixée axialement et en pouvant tourner dans la pièce adaptatrice (434), de préférence un épaulement radial (494), contre lequel le cône peut être pressé pour générer une force d'appui, étant prévu pour la face frontale intérieure (493) du cône (485) sur la partie support (410).

18. Adaptateur pour un montage de bridage rigide radialement et axialement d'un corps en rotation (12; 112; 212; 312; 412), en particulier un disque de meulage sur une partie support (10; 110; 210; 310; 410), qui présente un mandrin de centrage axial (18), pouvant être introduit dans une ouverture de logement centrée (16) du corps en rotation (12) et une collerette (20) sensiblement radiale, s'y raccordant, qui peut être mise en appui avec le corps en rotation (12), l'adaptateur (34) présentant une partie annulaire élastique radialement avec une surface adaptée d'une part à la surface extérieure (24) du mandrin de centrage (18) et, d'autre part, à la surface intérieure de l'ouverture de logement (16), et présente une surface pouvant épouser la forme de ces surfaces,
caractérisé en ce que
la partie annulaire est réalisée sous forme de prolongement axial (40) à paroi mince d'une plaque de serrage (36) et est reliée d'une seule pièce à cette plaque de serrage (36) qui dépasse radialement vers l'extérieur le prolongement axial (40), dans laquelle des moyens de serrage (50; 274 à 291) destinés à assurer un serrage axial de l'adaptateur (34) et de la partie support (10) sont logés, de préférence avec une sécurité empêchant les pertes, avec un appui sur l'adaptateur (34) et sur la partie support (10), la plaque de serrage (36) peut être pressée, par une collerette radiale (38) avec un agrandissement élastique du prolongement axial (40), contre le corps en rotation (12), faisant qu'un serrage peut être obtenu conte la collerette radiale (20).

19. Adaptateur selon la revendication 18, caractérisé en ce que le prolongement axial (40) a au moins une ligne d'affaiblissement (48) à l'aide de laquelle l'élasticité radiale peut être modulée.

20. Adaptateur selon la revendication 18 ou 19, caractérisé en ce que les moyens de serrage (50) sont constitués par des vis de serrage axiales, placées à espacement périphérique régulier les unes par rapport aux autres.

21. Adaptateur selon la revendication 20, caractérisé en ce que plusieurs vis de pressage (56) réparties régulièrement sur la périphérie sont prévues, dont la section filetée (60) est en prise avec la plaque de serrage (36).

22. Adaptateur selon la revendication 18 ou 19, caractérisé en ce que plusieurs corps de serrage (274; 374; 474) répartis régulièrement sur la périphérie sont prévus, qui prennent appui sur une partie d'adaptateur (234) et sont déplaçables au moyen d'une partie de réglage (285; 385; 485) actionnable depuis le côté extérieur de l'adaptateur (34), le déplacement se faisant radialement vers l'extérieur avec un engagement de plus en plus ferme avec l'épaulement intérieur (276).

23. Adaptateur selon la revendication 22, caractérisé en ce que les corps de serrage (274; 374; 474) font partie d'éléments de serrage réalisés à la façon de crampons, qui constituent, de façon décalée axialement par rapport au corps de serrage, une section de maintien (275), à l'aide de laquelle ils prennent appui en direction axiale sur l'adaptateur (234).

24. Adaptateur selon la revendication 23, caractérisé en ce que les éléments de serrage ont sensiblement la forme d'un U dont les branches (275; 278) constituent la section de maintien (275) et la section à crampons (278), et dont l'âme s'étend en direction axiale depuis l'intérieur du prolongement axial (40) par une saillie se projetant radialement vers l'intérieur en une gorge dotée d'une contre-dépouille, destinée de l'appui des sections de maintien (275).

25. Adaptateur selon la revendication 23 ou 24, caractérisé en ce que les corps de serrage (274; 374; 474) prennent appui radialement et intérieurement sur un cône (285) qui peut être entraîné axialement au moyen d'une transmission (284; 287; 288) actionnable depuis l'extérieur, pour entraîner en direction radiale les corps de serrage (274; 374; 474) avec une force modulée.

26. Adaptateur selon la revendication 25, caractérisé en ce que le cône (285) siège sur l'extrémité intérieure d'une douille (284), qui s'étend en direction axiale et soutient les branches (275; 278) des corps de serrage.

27. Adaptateur selon la revendication 26, caractérisé en ce qu'une sécurité de rotation (290; 390; 497) est prévue pour le cône (285; 385; 485).

28. Adaptateur selon la revendication 26 ou 27, caractérisé en ce que la douille (284) est en engagement par son filetage avec une vis (287) s'étendant centralement, vis ayant, du côté tourné vers la plaque de serrage (236), un évidement intérieur (289; 389) destiné à l'engagement d'un outil d'actionnement pouvant être introduit centralement depuis l'extérieur.

29. Adaptateur selon la revendication 26 ou 27, caractérisé en ce que la douille (284) porte, dans la zone du cône (485), un filetage intérieur (495) qui est en prise avec une vis (487) s'étendant en direction axiale, vis dont la tête (498) est montée de façon fixée axialement et peut tourner dans l'adaptateur (434), de préférence pour la face frontale intérieure (493) du cône (485) étant prévu, sur la partie support (410), un épaulement radial (494) contre lequel le cône (485) peut être pressé pour générer une force de pressage.
